(19) Europäisches Patentamt
European Patent Office
Office européen des brevets

(11) Publication number: **0 459 784 A2**

# (12) EUROPEAN PATENT APPLICATION

(21) Application number: **91304856.7**

(22) Date of filing: **29.05.91**

(51) Int. Cl.$^5$: **C08K 13/04**, // C08J5/04, (C08K13/04, 7:02, 3:20)

(30) Priority: **30.05.90 US 530373**

(43) Date of publication of application:
**04.12.91 Bulletin 91/49**

(84) Designated Contracting States:
**AT BE CH DE ES FR GB IT LI NL SE**

(71) Applicant: **THE DOW CHEMICAL COMPANY**
**2030 Dow Center Abbott Road**
**Midland, MI 48640 (US)**

(72) Inventor: **Yats, Larry D.**
**2840 Franklin Drive**
**Clare, Michigan 48617 (US)**
Inventor: **Gunderman, Roland E.**
**11581 South Grant**
**Clare, Michigan 48617 (US)**
Inventor: **Keiser, William D.**
**220 South Lincoln Street**
**St. Louis, Michigan 48880 (US)**

(74) Representative: **Burford, Anthony Frederick et al**
**W.H. Beck, Greener & Co. 7 Stone Buildings**
**Lincoln's Inn**
**London WC2A 3SZ (GB)**

## (54) Polymeric composites having high flammability resistance, and a method of making composites.

(57) The fire retardancy of a composite comprising a heat fusible polymer matrix, a reinforcing material and a binder material is improved by incorporating an inorganic oxygen-containing compound therein. The composite is formed by flocculating an aqueous slurry of said components, dewatering the flocculate and drying the resultant mat. The dried mat can be consolidated by heat and pressure to form a sheet and then thermoformed and heat expanded in the direction perpendicular to the plane of the sheet to form a panel.

EP 0 459 784 A2

Polymeric materials of hydrocarbons by their very nature have a proclivity toward combustion. The flammability of hydrocarbon polymers has limited the use of polymeric materials for many applications. The term "polymeric materials" is here limited to hydrocarbon polymers. Other polymeric materials are known, most notably polymers of silicon, but are not included within the scope of this discussion. Prior art efforts to enhance the fire resistance of polymeric materials to combustion in the sense of supporting flame, and ignition of combustion include the addition of halide substituents to the hydrocarbon. Typical approaches to impart fire retardant properties include that taught in US-A- 3,493,460 wherein polymeric material is laminated between fire retardant layers of a self-extinguishing thermosetting resin such as epoxy polymers including liquid resin of chlorinated bisphenol, liquid resin of brominated polyglycidyl ether, and resin of brominated bisphenol. Self-extinguishing thermoplastic compositions are also taught in US-A- 3,420,786 comprising styrene polymer, an organic bromine such as 1,2,5,6,9,10 hexabromocyclododecane, and 2,3-dimethyl-2,3-diphenol-butene.

Understandably, the demand for polymeric materials demonstrating resistance to flammability is driven by a desire for human safety as well as reduced property loss. Flammability concerns are particularly focused in the air transport industry. The Federal Aviation Administration of the United States (FAA) established a committee to examine factors affecting the ability of an occupant of an aircraft cabin to survive in a post-crash environment in June 1978. The committee became known as the Special Aviation Fire and Explosion Reduction (SAFER) Advisory Committee. The final report of the committee was published as FAA, Vol. 1, FAA-ASF-80-4, June 26, 1980. The report recommended improved materials for aircraft cabin construction be developed and that evaluation of aircraft cabin structural materials focus on the affects of radiant heat on the cabin panels. The flammability, or propensity of a material to rapid combustion, is comprised of several identifiable steps in the combustion process. Discussion of these steps as they apply to polymeric materials appears in the Encyclopedia of Polymer Science and Engineering, John Wiley & Sons, New York, Vol. 7, 1987. Radiant flux is there identified as an important parameter in the ignition of polymeric materials.

Reported minimum radiant flux values at which polymeric materials ignite include:

MINIMUM RADIANT FLUX VALUES FOR IGNITION

| Material | Flux ($kW/m^2$) |
|---|---|
| Polyethylene | 19 |
| Poly(methylmethacrylate) | 18 |
| Polyoxymethylene | 17 |
| Polypropylene | 20 |
| Polystyrene | 29 |
| Polytetrafluoroethylene | 43 |
| Polyurethane foam | 16-34 |
| Polyvinylchloride | 21 |

The FAA responded to the SAFER Advisory Committee report by studying aircraft fire characteristics and establishing stiffer standards for flammability of aircraft cabin interior materials. FAA standards focused on flammability because correlations are claimed by FAA to exist between flammability and smoke emission, and between flammability and toxic emissions. Notice of proposed rulemaking 85-10 Federal Register, April 16, 1985 (50 FR 1503), and 51 FR 26206, 14 CFR 25.853(a-1) and 14 CFR Appendix F to Part 25. Therefore, the safety standards imposed by FAA are limited to the flammability of aircraft cabin materials, smoke emission, and toxic emission are presently addressed by FAA safety indirectly by flammability limits only. The standard imposed for commercial aircraft of capacity of 20 or more passengers requires that effective August 1990 all interior ceiling and wall panels, partitions, and outer surfaces of gallies, large cabinets, and storage compartments must not release more than a total of 65 kilowatts (kW)-minute/meter$^2$ over two minutes exposure (two minute integral

of the heat release rate) to the standard incident radiant energy flux of 35 kW/m$^2$. In addition, the peak heat release must not exceed 65 kW/meter$^2$ over five minutes of exposure to the incident radiation. Testing must be according to ASTM E-906 as modified by 35 CFR Appendix F to Part 25.

The standard imposed exceeds the minimum radiant flux necessary for ignition of most common polymeric materials noted above. The listed polymers which have a minimum radiant flux necessary for ignition in excess of 35 kW/meter$^2$ are not generally considered suited for aircraft interior structural panels.

There is needed, therefore, a structural material offering the structural flexibility of a polymer, or polymeric matrix composite having the characteristics of a light weight, durability, and structural integrity necessary to function as an aircraft interior structural panel which also exhibits a peak heat release rate of less than 65 kW-/meter$^2$ during a five minute exposure to the incident radiant flux, and a total heat release over the first two minutes of exposure to the standard incident flux of less than 65 kW/meter$^2$. Surprisingly, Applicant's inventive composite material can satisfy this need and provides other advantageous features as well as other useful features and properties as disclosed herein.

This invention provides a reinforced polymeric composite comprising a heat-fusible polymer in particulate form, a reinforcing fiber, a binder material, an inorganic oxygen-containing compound, which exhibits a particularly low flammability and low smoke emission. A method of preparing the composite of this invention which comprises forming an aqueous slurry of solid, water-insoluble, heat-fusible organic polymer, a reinforcing fiber, a binder, and an inorganic oxygen-containing compound is also provided by this invention.

When prepared according to the process of this invention, the composites exhibit uniform distribution of reinforcing fibers, heat-fusible polymer, inorganic oxygen-containing compound, binder, and optional ingredients. The composite exhibits particularly good wet strength which facilitates manufacture according to the disclosed process. The composites may be densified into sheets by the application of heat and pressure. Multiple layers of the composite and/or densified sheets may be laminated to form a laminate by the application of heat and pressure. A remarkably uniform laminated product results which resists delamination. Molded products may be formed from one or more layers of composite.

The process of this invention requires an aqueous medium, a binder, a heat-fusible polymeric powder or dispersion, a reinforcement fiber, and an inorganic oxygen-containing compound. If the binder chosen is a bound charged latex, a flocculant is required. If the binder chosen is an ethylene acrylic acid copolymer, then flocculation may be achieved by means of a pH adjustment. A flocculant may optionally be used with or without a pH adjustment to flocculate an ethylene acrylic acid binder. The binder useful in this process may be in the form of a bound charged latex or a stable aqueous dispersion of a salt of an ethylene-acrylic acid copolymer.

The latexes used as binders for the practice of this invention are aqueous colloidal dispersions of substantially water-insoluble organic polymers having anionic or cationic bound charges in an amount sufficient to provide stabilization of the colloid, but insufficient to cause the polymer to be water-soluble. Such an amount will usually be from 0.04 to 0.60 milliequivalent of bound charge/gram of latex solids. The term "bound to the polymer" with respect to ionic groups or charges, refers to ionic groups or charges which are not desorbable from the latex particles by dialysis against deionized water.

By "available" charge is meant the amount of charge an ionizable group would provide to a latex particle when fully ionized.

By the term "pH independent groups" as applied to ionic groups is meant that the groups are predominantly in ionized form over a wide range of pH, e.g., 2-12. Representative of such groups are sulfonium, sulfoxonium, isothiouronium, pyridinium, quaternary ammonium groups, sulfate, and sulfonate groups.

The latex of essentially water-insoluble organic polymeric binders have a backbone which may be natural or synthetic and may be a homopolymer or a copolymer of two or more ethylenically unsaturated monomers or may be derived from such homopolymers or copolymers. Representative organic polymers are natural rubber, the synthetic rubbers such as styrene/butadiene rubber, isoprene rubbers, butyl rubbers, and other rubbery or resinous polymers of unsaturated monomers which are film-forming, preferably at room temperature or below, although in a particular instance a polymer may be used which is film-forming at the temperature of processing. Non-film-forming polymers may be used in blends providing the resulting blend is film-forming. Polymers which are made film-forming by the use of plasticizers may be used. Polymers which are readily available in latex form are preferred, especially hydrophobic polymers which are prepared by emulsion polymerization of one or more ethylenically unsaturated monomers. When in latex form, such polymers advantageously have an average particle size of from 500 to 5,000 Å (50-500 nm) and preferably have a particle size of from 800 to 3,000 Å (80-300 nm) as measured by electron microscopy.

Among latexes which can be used in the present invention are those described in US-A- 4,056,501, issued November 1, 1977, to Gibbs et al. (Gibbs), incorporated herein by reference. The latexes of Gibbs are cationic-structured particle latexes consisting of a water-insoluble, non-ionic, organic polymer core encapsulated with a thin layer of a copolymer having chemically-bound pH independent cationic groups wherein the bound

cationic charges are at or near the outer surface of the particles. Anionic latexes which may be employed include such products as carboxylated styrene/butadiene latexes and acrylic latexes which are prepared by emulsion polymerization. The binder is generally employed in an amount sufficient to provide from 1 to 10 weight percent, solids basis, of the composite.

Preferred latexes are those which when cast into films and dried have a relatively low water adsorption and a relatively high wet tensile strength. These preferred latexes have a 24 hour water-adsorption value of desirably less than 20, more desirably less than 18, preferably less than 16 and more preferably less than 14 percent as measured by ASTM D-570-63.

In addition to the binder, a flocculent or coagulant is employed with the binder. Any substance capable of destabilizing the dispersion of binder, heat-fusible polymer, reinforcement fiber, and inorganic oxygen-containing compound may be used. Usually, partially hydrolyzed anionic polyacrylamide is employed as a flocculent in aqueous systems wherein a cationic binder, generally a cationic latex, is employed. Cationic-modified polyacrylamide and diallyldiethylammonium chloride are useful as flocculants for aqueous systems wherein an anionic binder, generally an anionic latex is employed.

Alternatively, an aqueous dispersion of an ethylene-acrylic acid copolymer may be used as a binder. Conveniently, said copolymer is sufficiently in the form of a salt to readily disperse in the aqueous system. Generally, the said binder is a salt of an ethylene acrylic acid copolymer having an acrylic acid content of from 12 to 30 percent by weight copolymer solids. Preferably, the acid content is 20 percent by weight copolymer solids. The copolymer is conveniently dispersed in an aqueous phase when present as an aqueous ammonium dispersion or aqueous alkali metal dispersion to form their respective salts.

For example, the ethylene acrylic acid copolymer is stabilized in aqueous dispersions as characterized by the following structural diagram.

$$\left(CH_2-CH_2-\underset{\substack{|\\ C=O\\ |\\ OH}}{CH}-CH_2\right)_m + M^+OH^-$$

$$\left(CH_2-CH_2-\underset{\substack{|\\ C=O\\ |\\ O-M^+}}{CH}-CH_2\right)_m + H_2O$$

wherein $M^+$ is $NH_4^+$, $Na^+$, $K^+$, $Li^+$, etc. Preferably, the ethylene acrylic acid is dispersed in an aqueous ammonium dispersion where $M^+$ is $NH_4^+$.

A suitable binder is commercially available through The Dow Chemical Company under the trademark Primacor® which is a high melt index (300 to 3,000), ethylene acrylic acid copolymer in an aqueous ammonium dispersion or an aqueous alkali metal dispersion having a variable acid content of 15 to 20 percent by weight copolymer solids.

The invention also requires a normally solid, heat-fusible organic polymer. By "heat-fusible" is meant that the polymer particles are capable of deformation under heat to join into a unitary structure. The heat-fusible organic polymer component of the present invention is desirably a hydrophobic water-insoluble addition polymer. These polymers may be in the form of a powder or an aqueous dispersion. Suitable heat-fusible organic polymers include addition and condensation polymers such as, for example, polyethylene: ultra-high molecular weight polyethylene; chlorinated polyethylene; polycarbonate; bipolymers of ethylene and acrylic acid; polypropylene; Nylon™; polyphenylene oxide resins; polyoxymethylenes; polyester; terpolymers of acrylonitrile, butadiene, and styrene; polyvinyl chloride; bipolymers of a major portion of vinylidene chloride and a minor portion of at least one other α,β-ethylenically unsaturated monomer copolymerizable therewith; polyphenylene sulfide, crystalline polyamide, polyetheretherketone, and styrene homopolymer or copolymers. The polymer powder generally and advantageously has an average particle size in the range of 1 to 400μm, preferably in a range from 50 to 150μm. The polymers are generally employed in an amount of from 19 to 79 percent by weight of the solids, dry weight basis. A particularly preferred organic polymer is a polyolefin powder in its as-polymerized state when such polymer has been prepared by the process of US-A- 4,323,531. Of course, blends of polymer may be used.

The reinforcement fiber includes both organic and inorganic products such as graphite, metal fibers, aromatic polyamides, cellulose, and polyolefin fibers, but preferably and advantageously comprises glass fibers such as chopped glass strains having a length of 1/8 to 1 inch (3 to 25 millimeters) or milled glass fibers which generally have a length of about 1/32 to 1/8 inch (0.8 to 3 mm). The glass fibers are advantageously heat cleaned. To improve impact properties, reinforcing fibers may have a thin coat of a sizing composition, for example, a polyolefin resin or starch thereon. Silane coupling agents are preferable sizing compounds for glass fibers such as N-(2-aminoethyl)-3-aminopropyltrimethoxysilane. Suitable silane coupling agents are available from Dow Corning Corporation, Midland, Michigan 48640 under market designations Z-6000 series and Z-1200 series silane coupling agents. The reinforcing material generally comprises from 10 to 80, especially 10 to 51, percent by weight of the composite.

After thorough mixing of the aqueous dispersion, a flocculent (sometimes referred to as a coagulant) is added to the system with continued mixing. Any substance capable of destabilizing the latex dispersion may be used. Examples of suitable flocculants include partially hydrolyzed polyacrylamide for cationic systems, and a modified cationic polyacrylamide and diallyldiethylammonium chloride for anionic systems.

The inorganic oxygen-containing compound of this invention is present from 5 to 40 percent by weight of the dry weight of the composite. Advantageously, the inorganic oxygen containing compound is present from 10 to 30 percent by weight. Generally oxygen-containing compounds may be formed from chemical compounds including oxygen and elements having atomic numbers of 5, 12 to 15 and 20 to 30. Suitable inorganic oxygen-containing compounds include hydroxides, oxides and other compounds of Mg, Ca, Si, Ti, P, Al, Zn and Cu. Optional ingredients may be added to the composite including pigments, dyes for coloring the composite compound or rendering the composite opaque. Preservatives, such as anti-oxidents, UV stabilizers, may be incorporated for their stated purpose. Additional optional ingredients include foaming agents, anti-foaming agents, bacteriocides, electromagnetic radiation absorbing agents, for their stated purposes. All optional ingredients are usually present in a combined amount of less than 10 percent by weight of dried composite.

Further, a portion of the heat-fusible polymer of the composite may be present in the form of synthetic polymeric fibers, pastes, or pulps which may contribute advantageous properties of cohesion of the composite prior to heat fusion of the polymeric matrix. For example, polyaramid pulp additives are generally disclosed in FR-A- 2507123 as contributing to the cohesive properties of the composite. Other polymeric fibers useful in the composites of this invention include fibers of polyethylene, polypropylene, polyvinylchloride, polyester, polystyrene, acrylonitrile/butadiene/styrene copolymer. One preferred polymeric fiber is commercially available from Himont Corporation under the trademark of PULPEX-E™ for polyethylene fibers and the trademark of PULPEX-P™ for polypropylene fibers. The amount of heat-fusible polymer optionally present in the form of fiber, paste, or pulp usually is from 1 to 10 percent based on total solids, preferably from 3 to 5 percent.

The composites of this invention are conveniently and preferably prepared by first combining the heat-fusible polymer and the inorganic oxygen-containing compound as by melt-mixing prior to incorporating the polymer into the aqueous slurry. Then the heat-fusible polymer and inorganic oxygen containing compound, and reinforcing fiber are uniformly dispersed in an aqueous media. Alternatively, the heat fusible polymer and the inorganic oxygen-containing compound may be added to the aqueous media without being previously combined. Preferably, the aqueous media is thickened. Thickeners which can be added to the water are methylcellulose, carboxymethylcellulose, polymers of acrylamides, gums, or clays to name a few. One commercially available thickener under the trademark Kelzan XC™ is available from Kelco Company, a xanthan gum. A thickened aqueous slurry facilitates a uniform dispersion of the solid ingredients in the aqueous dispersion. Enhanced physical properties are believed to result from better dispersion obtained in the mixing step. The viscosity of a thickened water is preferably greater than 1 centipoise (cps) (mPa.s) (as measured by Brookfield L.V.D.T. at 12 rpm). More preferable are viscosities from 1.5 to 10 cps (mPa.s). If a binder of a charged latex is used in the aqueous slurry, then the latex is generally added to the aqueous slurry following reinforcing material. The heat-fusible polymer in particulate form and as fibers, paste, or pulp generally follows the binder as does the inorganic oxygen-containing compound and any optional ingredients. All additions to the aqueous slurry are made while the slurry is continuously stirred. Stirring continues until all ingredients are observed to be uniformly dispersed. The flocculant is added to the continuously stirred slurry of uniformly dispersed solids. The amount of flocculant added to the aqueous system is at least that amount necessary to balance the bound charge of the latex binder. After sufficient stirring to mix uniformly the flocculent in the slurry, stirring is stopped, and the slurry is permitted to flocculate or agglomerate. The agglomerated dilute aqueous mixture is formed into a sheet or web by dewatering.

The time necessary to form the uniformly dispersed aqueous slurry of composite forming solids is generally not more than a few minutes in appropriate equipment. The rate at which uniform dispersion of composite-forming solid materials are uniformly dispersed depends upon the container configuration, mixing apparatus and rotation rate of the mixer. Generally, the composite forming solids may be uniformly dispersed and ready for

flocculation in the aqueous media in about 2 minutes. However, depending upon the polymer matrix, reinforcing fibers, oxygen-containing compound, and optional ingredients selected, as much as 10 minutes may be required. The aqueous slurry containing composite-forming solids generally comprise from 0.1 to 5, preferably 0.2 to 1.0 percent solids by weight of the aqueous slurry for preparation of composite mats in a batch mode. Manufacture of composite mats by continuous machinery advantageously makes use of an aqueous slurry having from 0.01 to 0.2 percent solids by weight, more advantageously from 0.05 to 0.1 percent solids by weight.

Flocculation of the aqueous slurry of composite-forming solids generally occurs in less than a minute after the flocculant is dispersed in the aqueous slurry.

The flocculated slurries formed into a composite mat, or sheet, or web and dewatered in a conventional manner according to paper making practice. Composite sheets may be formed using a sheet mold on a laboratory scale, or modified Fourdrinier or cylinder continuous paper making machinery to form a sheet of composite solids and to remove water from the solids.

Composites prepared using an ethylene-acrylic acid copolymer (EAA) as a binder are prepared in a manner similar to composites using a bound charged latex binder. The pH of the aqueous medium is adjusted to an alkaline condition, i.e., pH greater than 7, prior to addition of the EAA. Alkaline pH adjustment usually is achieved by addition of typical alkaline compounds such as ammonium hydroxide, sodium hydroxide, sodium carbonate, sodium bicarbonate and corresponding potassium compounds. After the composite forming solids are uniformly dispersed in the aqueous media, flocculation or coagulation of the solids of the aqueous mixture is accomplished by the addition of acid to destabilize the EAA binder. Mineral acids such as sulfuric, nitric, hydrochloric, and phosporic acid, an organic acid such as carboxylic (acetic, formic, benzoic, salicyclic) and dicarboxylic (oxalic, phthalic, adipic) are suitable for destabilizing the EAA binder by lowering the pH of the aqueous medium to cause the composite forming solids to coagulate. Once destabilized, the composite forming solids may be formed into a mat according to paper-making practice. Where desired, the flocculation step may be accelerated by the addition of flocculants suited for anionic latex binder systems such as partially hydrolyzed cationic polyacrylamides.

The dewatered composite mat may be further processed to form useful articles of this invention. The dewatered and dried mat may be densified under conditions of heat and pressure to fuse the polymer, and non-polymeric composite solids to form a sheet. Laminated sheets of the composite may be prepared from multiple layers of previously unconsolidated composite mats under conditions of heat and pressure as are used to fuse the previously unconsolidated mats. Laminated sheets of the composite may also be prepared from multiple layers of previously consolidated composite sheets by the application of heat and pressure.

Individual sheets may have a consolidated thickness from 2 mils to 30 mils (0.05 mm to 0.75 mm). Individual sheets and laminated sheets may be lofted, that is have increased dimension perpendicular to the plane formed by the sheet. The density of the composite usually ranges from 0.25 to 1.8 g/cc. The composite may be formed into articles having features in a direction perpendicular to the plane formed by the sheet by the application of heat and pressure, i.e. thermo-formed. Thermoforming is a particularly useful method of shaping the composite sheets and laminates to form segments including window reliefs required for aircraft interior panels.

Usually, the composites of the invention exhibit a two minute total initial heat release on exposure to an incident radiant energy flux of 35 kW/m$^2$ of not more than 100, preferably not more than 65, kW-min/m$^2$. It also is preferred that they exhibit a maximum rate of smoke release of not more than 100 SMOKE units/m$^2$ (see below).

Further features of the invention are disclosed in US-A-4,426,470, US-A-4,550,131; and US-A-4,643,940, and by the following examples which illustrate but do not limit the scope of the invention.

## Comparative Example 1

An aqueous slurry is prepared beginning with 56 liters of water. Water is thickened by the addition of 2 g of xanthan gum sold under the designation Kelzan XC™ by Kelco Company. The xanthan gum is dispersed in the water with continual stirring for two minutes. 16.8 Grams of polypropylene pulp solids sold under the designation Pulpex P™ by Himont Corporation is first dispersed in a blender or hydropulper in water and added to the thickened water. The polypropylene pulp is dispersed in the thickened water by stirring for one minute. 196 Grams of glass fibers having a length of 3/16 inch (4.75 mm), a fiber diameter of 13 µm is added to the thickened water. Stirring of the water continues for another minute to uniformly disperse the glass fibers. Suitable glass fibers are sold under the designation 415X6 by Owens Corning Fiberglas Corp., Toledo, Ohio, USA.

To the stirred aqueous slurry is added 322 g of polypropylene powder sold under the designation PF212 by Hercules Corporation having a melt index of 12 and an average particle size of 150 µm, and 19.6 g of solids of an anionic bound charged latex binder. The latex binder is prepared by emulsion polymerization of 54 percent styrene, 45 percent butadiene and 1 percent fumaric acid available from The Dow Chemical Company, Midland,

Michigan U.S.A. under the designation of XD30570.3. Stirring of the aqueous slurry continues for two minutes to uniformly disperse the aqueous slurry. The aqueous slurry is then flocculated by the addition of 1 g of a modified cationic polyacrylamide flocculant sold under the designation Betz 1260™ by Betz Laboratories, Trevose, Pennsylvania, USA as a 0.5 percent aqueous solution. All weights stated are of solid ingredient. The aqueous slurry is mixed with the flocculant for 1.5 minutes.

The thickened aqueous slurry is next dewatered in a laboratory sheet former followed by wet pressing in calender rolls between felt mats to further remove water. The dewatered composite mat is dried at 110°C for 2-1/2 hours. The dried mat is found to retain more than 95 percent of the solids charged to the aqueous slurry.

Comparative Example 2

Dried composite mats prepared according to Comparative Example 1 are densified at a pressure of 278 psi (1917 kPa) for 3.5 minutes, then at 1389 psi (9,577 kPa) for an additional 1.5 minutes in a die preheated to 185 to 190°C. The die is then cooled to about 50°C and the pressure released. The resulting consolidated sheet has a thickness of 1/8 inch (3.2 mm) and a density of 1.14 g/cc.

Comparative Example 3

Densified or consolidated random fiber composite sheet of Comparative Example 2 is exposed to a radiant energy flux of 35 kW/meter$^2$. Total heat release and total smoke release after two minutes is determined according to ASTM E-906. The maximum rate of heat release during the 5 minutes of exposure to the standard radiant energy exposure is also determined. The results appear in Table I below.

The ASTM E-906 test is derived from a test developed at Ohio State University. The test may continue to be popularly identified as "the OSU Burn Test". Smoke release is measured in SMOKE units. The acronym SMOKE stands for a Standard Metric Optical Kinetic Emission unit. One SMOKE unit is the concentration of smoke particulates in a cubic meter of air which reduces the percent transmission of light through a one-meter path to 10 percent. Smoke test results are reported as a Smoke Release Rate and Cumulative Smoke Release over the test time interval of five minutes.

Comparative Example 4

A densified composite sheet is prepared generally according to Comparative Example 2 up to the step of reducing the temperature of the consolidated sheet in the press. After the consolidation of the composite mat to form a sheet, the press platen is opened to twice the thickness of the densified sheet, 1/4 inch (6.35 mm) and the temperature of the die maintained for two minutes. The temperature of the die is then reduced to 50°C and the sample removed. The composite is found to have expanded to fill the void space of the die. The composite sheet has a density of 0.7 g/cc and a thickness of about 0.25 inch (6.35 mm).

Comparative Example 5

A composite sheet prepared according to Comparative Example 4 is tested for flammability and smoke emission by by the method of Comparative Example 3. The test results appear in Table I below.

## TABLE I

| Comp. Example | Composite Including Polypropylene Polymeric Matrix | Density g/cc | 2 Minute Total Heat Kw-min/m2 | Maximum Rate of Heat Release Kw/m2 | 2 Minute Total Smoke SMOKE-min/m2 | Maximum Smoke Release Rate SMOKE/m2. |
|---|---|---|---|---|---|---|
| C-3 | 35% glass fibers | 1.14 | 137 | 139 | 57 | 62 |
| C-5 | 35% glass fibers | 0.7 | 120 | 108 | 41 | 42 |
| **EXAMPLE** | | | | | | |
| 1 | 35% glass fibers/ 25% $Mg(OH)_2$ | 1.5 | 63 | 55 | 1 | 1.5 |
| 2 | 35% glass fibers/ 25% $Mg(OH)_2$ | 0.72 | 73 | 52 | 0.04 | 1 |
| 4 | 35% carbon fibers/ 7.5% $Mg(OH)_2$ | 0.31 | 73 | 49 | 2.4 | 42 |
| 6 | 35% carbon fibers/ 15% $Mg(OH)_2$ | 0.31 | 56 | 16 | 3.4 | 42 |
| 7 | 35% glass fibers/ 20% MgO/ZnO 60:40 | 1.3 | 89 | 195 | 13 | 100 |
| 8 | 35% glass fibers/ 20% MgO/ZnO 60:40 | 0.37 | 100 | 128 | 8 | 52 |

Example 1

A random fiber composite mat is prepared according to the description of Comparative Example 1 except that 138 g of $Mg(OH)_2$ is substituted for 138 g of polypropylene to prepare a sample which contains approximately 25 weight percent $Mg(OH)_2$. The $Mg(OH)_2$ is melt blended with the polypropylene and subsequently ground to a particle size suitable for the formation of an aqueous slurry. The sample is densified according the procedure of Comparative Example 2. The random fiber composite mat thus prepared has a density of 1.5 g/cc and a thickness of 1/8 inch (3.2 mm). The densified sheet is tested for flammability according to the method of Comparative Example 3. The total heat released and heat release rate are observed as 1/2 the total heat release and heat release rate of Comparative Example 3. The reduction of smoke release is more remarkable. Test results appear in Table I.

Example 2

A mat of random fiber composite prepared according to Example 1 is lofted to occupy twice the densified volume by expansion of the sheet, that is by expansion perpendicular to the plane formed by the sheet, as described in Comparative Example 4. The lofted composite sheet has a density of 0.72 g/cc and a thickness of 1/4 inch (6.35 mm). The sample is tested according to ASTM E-906. The total heat released and the heat release rate are observed to be substantially lower than the total heat release and heat release rate of Comparative Example 5. The smoke release is reduced by more than an order of magnitude. Test results appear in Table I.

Example 3

A random fiber composite mat is prepared according to the description of Comparative Example 1 except that 196 g of glass fibers is replaced with carbon fibers having a fiber length of 1/8 in (3.2mm) sold under the trade designation Fortafil 3(C) 1/8 inch 04 available from Fortafil Fibers, Inc., Rockwood, Tennessee, USA. 41.5 g of $Mg(OH)_2$ is substituted for a like amount of polymer. Prior to formation of the aqueous slurry, the $Mg(OH)_2$ is melt mixed with the polypropylene. After the melt mixed polymer and $Mg(OH)_2$ is allowed to cool to room temperature it is ground to a particle size suitable for formation of an aqueous dispersion from which a composite mat is prepared.

Samples of the mat are densified according to the procedure of comparative example 2. The random fiber composite thus prepared has a density of 1.15 g/cc and a thickness of 1/8 in (3.2 mm).

Example 4

The random fiber composite of Example 3 is lofted according to the procedure of Example 2 to a density of 0.31. The sample is tested according to ASTM E-906. The test results appear in Table I.

Example 5

A random fiber composite mat is prepared according to Example 3 except that 83 g of polypropylene polymer is replaced with $Mg(OH)_2$.

Samples of the mat are densified according to the procedure of Comparative Example 2. The random fiber composite thus prepared has a density of 1.17 g/cc and a thickness of 1/8 in (3.2mm).

Example 6

The random fiber composite of Example 5 is lofted according to the procedure of Example 2 to a density of 0.31 g/cc. The sample is tested according to the method of Comparative Example 3. The test results appear in Table I.

Example 7

A random fiber composite mat is prepared according to Comparative Example 1 except that 64 g of a mixture of 60 percent MgO and 40 percent ZnO sold under the trade designation Ongard 2 by Anzon America, Inc. Freehold, New Jersey, is substituted for 64 g of polypropylene.

Samples of the mat are densified according to the procedure of Comparative Example 2. The random fiber

composite thus prepared has a density of 1.3 g/cc and a thickness of 1/8 in (3.2 mm). The densified sheet is tested for flammability according to the method of Comparative Example 3. The test results appear in Table I.

Example 8

The random fiber composite of Example 7 is lofted according to the procedure of Example 2 to a density of 0.37 g/cc. The sample is tested for flammability according to the method of Comparative Example 3. The test results appear in Table I.

## Claims

1. A fire retardant composite comprising a water-insoluble, heat fusible polymer matrix, reinforcing fibers and a binder material, characterized in that said composite contains 5 to 40 weight percent (based on the dry weight of the composite) of an inorganic oxygen-containing compound whereby the two minute total initial heat release on exposure to an incident radiant energy flux of 35 kW/m$^2$ is reduced.

2. A composite as claimed in Claim 1, wherein the heat fusible polymer matrix comprises 19 to 79 dry weight percent of the composite; the reinforcing fibers comprise 10 to 80 dry weight percent; the binder material comprises 1 to 10 dry weight percent; and the composite has a density of 0.25 to 1.8 g/cc.

3. A lofted composite as claimed in either of the preceding claims.

4. A composite as claimed in Claim 3, wherein the composite has a density of 0.25 to 0.75 g/cc.

5. A composite as claimed in any one of the preceding claims, wherein said two minute total initial heat release does not exceed 100 kW-min/m$^2$.

6. A composite as claimed in any one of the preceding claims, wherein the inorganic oxygen-containing compound is present in an amount of 10 to 30 weight percent.

7. A composite as claimed in any one of the preceding claims, wherein the inorganic oxygen-containing compound contains a cation selected from Mg, Ca, Si, Ti, P, Al, Zn, and Cu.

8. A composite as claimed in Claim 7, wherein the inorganic oxygen-containing compound is $Mg(OH)_2$, MgO, ZnO or a mixture thereof.

9. A composite as claimed in any one of the preceding claims, wherein the heat fusible polymer is a polyolefin.

10. A composite as claimed in any one of the preceding claims, wherein the binder is a bound charge latex.

11. A composite as claimed in any one of Claims 1 to 9, wherein the binder is an ethylene acrylic acid copolymer.

12. A composite as claimed in any one of the preceding claims, wherein the reinforcing fibers are glass or carbon.

13. A composite as claimed in any one of the preceding claims exhibiting a maximum rate of smoke release of not more than 100 SMOKE/m$^2$.

14. A method of increasing the fire retardancy of a fire retardant composition comprising a heat fusible polymer matrix, reinforcing fibers and a binder material by incorporating therein an inorganic oxygen-containing compound in an amount of 5 to 40 weight percent based on the dry weight of the resultant composite.

15. A method as claimed in Claim 14, wherein the amounts and/or nature of the heat fusible polymer, reinforcing fibers, binder material and/or inorganic oxygen-containing compound is as defined in any one of Claims 2 to 12.

**16.** The use of an inorganic oxygen-containing compound to improve the fire retardancy of a fire retardant composition comprising a heat fusible polymer matrix, reinforcing fibers and a binder material.

**17.** A use as claimed in Claim 15, wherein the amounts and/or nature of the heat fusible polymer, reinforcing fibers, binder material and/or inorganic oxygen-containing compound is as defined in any one of Claims 2 to 12.

**18.** An aircraft interior panel formed of a composite as claimed in any one of Claims 2 to 13.

**19.** A method of making a fire retardant composite comprising:
a) forming an aqueous slurry of a heat fusible water-insoluble polymer, reinforcing fibers, an inorganic oxygen-containing compound, and a binder,
b) flocculating the aqueous slurry,
c) dewatering the flocculate to form a composite mat,
d) drying the mat,
e) consolidating the mat by the application of heat and pressure to form a composite sheet, and
f) thermoforming and heat expanding the composite in the direction perpendicular to the plane formed by the sheet as a single step, or in sequence.

**20.** A method as claimed in Claim 19, further comprising consolidating a plurality of composite mats or previously consolidated composite sheets, or both, under conditions of heat and pressure to fuse composite into a laminate.

**21.** A method as claimed in Claim 20, wherein at least one laminated sheet has a composition different than at least one other composite sheet in the laminate.

**22.** A method as claimed in any one of Claims 19 to 21, wherein the amount and/or nature of the heat fusible polymer, reinforcing fibers, binder material and/or inorganic oxygen-containing compound is as defined in any one of Claims 1 to 13.

**23.** A method as claimed in any one of Claims 19 to 22, wherein the inorganic oxygen-containing compound is melt-mixed with the heat fusible polymer prior to formation of the aqueous slurry.